# EUROPÄISCHE PATENTSCHRIFT

(11) **EP 2 756 881 B1**
(45) Veröffentlichungstag und Bekanntmachung des Hinweises auf die Patenterteilung: **27.03.2019**
(21) Anmeldenummer: 14001409.3
(22) Anmeldetag: 15.05.2008
(51) Int. Cl.: B01J 20/34, B01J 8/08, B01J 8/12, B01D 53/04, C01B 32/20

(54) **VERFAHREN UND VORRICHTUNG ZUM THERMISCHEN REGENERIEREN VON ADSORPTIV UND/ODER ABSORPTIV BELADENEN SCHÜTTGÜTERN**
METHOD AND DEVICE FOR REGENERATING BULK MATERIAL THAT IS LOADED BY ADSORPTION AND/OR ABSORPTION
PROCÉDÉ ET DISPOSITIF DE RÉGÉNÉRATION THERMIQUE DE MATIÈRES EN VRAC CHARGÉES PAR ADSORPTION ET/OU ABSORPTION

(43) Veröffentlichungstag der Anmeldung: 23.07.2014
(62) Teilanmeldung aus: 08758545.1
(73) Patentinhaber: Grochowski, Horst, 46149 Oberhausen (DE)
(72) Erfinder: Grochowski, Horst, 46149 Oberhausen (DE)
(74) Vertreter: Schumacher, Horst

(56) Entgegenhaltungen:
- EP-A- 0 558 063
- EP-A1- 2 125 169
- DE-A1- 3 821 579
- DE-A1- 19 942 335
- RICHTER E ET AL: "Mechanisms and kinetics of SO2 adsorption and NOx reduction on active coke", GAS SEPARATION & PURIFICATION, ELSEVIER, Bd. 1, 1. Januar 1987 (1987-01-01), Seiten 35-43, XP002447260, ISSN: 0950-4214

## Beschreibung

### GEBIET DER ERFINDUNG

Die Erfindung betrifft ein Verfahren zum thermischen Regenerieren von adsorptiv und/oder absorptiv beladenen Schüttgütern gemäß Anspruch 1 sowie eine Vorrichtung zum thermischen Regenerieren von adsorptiv und/oder absorptiv beladenen Schüttgütern gemäß Anspruch 11. Dementsprechend wird das zu regenerierende Schüttgut in der Weise durch einen mehrstufigen Regenerationsreaktor geführt, dass das Schüttgut zunächst in den Regenerationsreaktor eingeschleust und dort in einer Aufheizstufe durch indirekt beheizte, in parallel angeordnete Regenerationsrohre unter Aufheizung und Entgasung geleitet wird sowie, ggf. nach Durchwandern einer Nachentgasungsstufe, nachfolgend in einer Abkühlstufe durch indirekt gekühlte, in parallel angeordnete Kühlrohre unter Abkühlung weiter geleitet und schließlich aus dem Regenerationsreaktor wieder ausgeschleust wird. Es handelt sich mithin um einen zumindest zweistufigen Reaktor mit jeweils außen beheizten bzw. gekühlten Rohren, die das Schüttgut vom Aufheiz- bzw. Kühlmedium fernhalten.

### TECHNOLOGISCHER HINTERGRUND

Neben den so genannten Röhren-Regeneratoren der vorbezeichneten Art ist auch ein Regenerationsverfahren bekannt, bei dem an Stelle einer indirekten Aufheizung oder Abkühlung das Schüttgut allein durch direkten Kontakt mittels eines Gasstromes aufgeheizt und in einer zweiten Reaktorstufe mittels eines anderen Gases allein durch direkten Kontakt abgekühlt wird (DE 42 24 778 A1). Bei diesem bekannten Verfahren wird das Kühlgas und das Aufheizgas jeweils getrennt voneinander gehalten und jeweils im Kreislauf durch eine Desorptionsstufe bzw. eine Aktivkokskühlstufe im Gegenstrom zu dem Schüttgut, z.B. einem beladenen Aktivkoks, geführt. Da das Heizgas im Kreislauf geführt wird und sich deshalb mit dem in dem Desorber unter Wärmeeinwirkung abgetriebenen Schadstoff (Reichgas) vermischt, ist der Aktivkoks bei seinem Austritt am unteren Desorberende noch von einer Reichgasatmosphäre umgeben. Die im Gleichgewicht mit dieser Atmosphäre stehenden Schadstoffe befinden sich auch noch im Poreninneren des Aktivkokses. Das aus dem Desorber unten austretende Schüttgut schleppt also eine gewisse Schadstoffmenge in den Aktivkokskühler unvermeidlich mit hinüber. Wegen der Kreislaufführung des Kühlgases durch den Aktivkokskühler, können sich diese Schadstoffbestandteile in dem Kühlkreislaufgas entsprechend anreichern. Dies hat eine unvermeidliche Rest- oder Neubeladung des regenerierten Aktivkokses mit Schadstoffen zur Folge, so dass im regenerierten Aktivkoks keine vollständige Aktivität bzw. Adsorptions- oder Absorptionskapazität vorhanden sein kann. Das im Kreislauf geführte Heizgas wird zum Teil indirekt, zum Teil aber auch direkt durch Zugabe heißer Verbrennungsgase aufgeheizt. Die heißen Verbrennungsgase finden sich zusammen mit dem Desorptionsgas als Mischung in dem Kreislauf sowie in dem ausgeschleusten Reichgas wieder. Will man das Reichgas in einem Weiterverarbeitungsschritt nutzen, so ist diese Verdünnung ungünstig.

Bei den Regenerierverfahren und -vorrichtungen der gattungsgemäßen Art, bei denen das Schüttgut die inneren Querschnitte zueinander paralleler Wärmeaustauschrohre durchwandert, die auf ihrer Außenseite indirekt mit Heißgas oder Kühlgas beaufschlagt werden, treten Verdünnungseffekte und Schadstoffverschleppungen der vorerwähnten Art nicht auf. Die Patentschriften DE 38 21 579 A1 und EP 0 558 063 A2 offenbaren auch ein Regenerierungsverfahren eines kohlenstoffhaltigen Absorptionsmittels und einen Regenerierapparat, wobei ein Heizgas bzw. eine Kühlmittel entlang jedes einzelnen Regenerations- und/oder Kühlrohres geleitet wird. Die Patentschrift DE 199 42 335 A1 offenbart auch ein Wanderbettreaktor zum Behandeln von Fluiden mittels eines als Schüttgut vorliegenden Feststoffes, vorzugsweise im Gegenstromverfahren, bei dem wenigstens ein Schüttgut von oben nach unten wandert und wenigstens ein Fluid von unten nach oben strömt, bestehend aus mindestens zwei übereinander angeordneten Reaktionskammern, welche auch geeignet ist zum thermische Regenerieren von ab/ adsorptiv beladenen Schüttgütern.

### DARSTELLUNG DER ERFINDUNG

Es wurde gefunden, dass bei gattungsgemäßen thermischen Regenerationsapparaten zur Regenerierung schadstoffbeladener Schüttgüter die Wärmeübertragung verbessert werden muss, um die Wirtschaftlichkeit und insbesondere den Regenerationsgrad des Schüttgutes zu verbessern.

Erfindungsgemäß wird mindestens ein Kontaktgas verwendet, das die mit Schüttgut befüllten Regenerationsrohre und/oder die mit Schüttgut befüllten Kühlrohre im Rohrinneren durchströmt. Diese Kontaktgasanwendung führt zu einer Reihe erheblicher Vorteile, die nachfolgend geschildert werden: Wenn ein (erstes) Kontaktgas durch die mit Schüttgut befüllten Kühlrohre geleitet wird, verbessert sich je nach Temperatur des Kontaktgases und der Kontaktgasmenge das Kühlergebnis nicht nur deshalb, weil der indirekten Kühlung in einem gewissen Ausmaß eine direkte Kühlung überlagert wird sondern auch, weil der Wärmeübergang zwischen Schüttgut und Kühlmedium erheblich verbessert wird. Das erste Kontaktgas führt darüber hinaus zu einem Abtreiben etwa vorhandener Restmengen an Schadstoffen, die im Lückenvolumen zwischen den Schüttgutkörnern und/oder in Poren des Schüttgutes noch vorhanden sind. Um diesen Effekt zu optimieren und das regenerierte Schüttgut maximal vor einer Widerbeladung mit Schadstoffen aus dem Reichgas zu schützen, wird das erste Kontaktgas im Gegenstrom zum Schüttgut, d.h. von unten nach oben durch die Kühlrohre geleitet. Besonders wichtig ist es, dass das erste Kontaktgas das regenerierte Schüttgut von leicht adsorbierbaren oder absorbierbaren Komponenten, wie SO₂, freihält um eine Neubeladung des Schüttgutes mit dieser Schadstoffkomponente bereits im Regenerationsapparat zu verhindern und die volle Adsorptionskapazität für einen neuen Einsatz, z.B. in einer adsorptiven trockenen Gasreinigungsanlage nutzen zu können. Geeignet als erstes Kontaktgas ist ein im Wesentlichen sauerstofffreies Gas. Dabei kann es sich z.B. um Stickstoffgas handeln. Das aus den Kühlrohren austretende erste Kontaktgas kann anschließend z.B. verworfen werden, indem es durch einen Kamin abgeführt wird, dies ggf. nach einer Reinigung von durch den durch das erste Kontaktgas abgetriebenen Schadstoffkomponenten.

Leitet man ein (zweites) Kontaktgas durch die mit Schüttgut befüllten Regenerationsrohre so wird durch diesen Schritt die Übertragung der indirekt über die Rohrmantelfläche von außen zugeführte Regenerationswärme auf die Schüttgutkörner verbessert. Gleichzeitig treibt das zweite Kontaktgas aufgrund der zwangsweisen Strömung durch die Regenerationsrohre die unter dem Wärmeeinfluss von dem Schüttgut desorbierenden Schadstoffe verstärkt von dem Schüttgut ab und unterstützt eine Reichgasströmung in Richtung auf ein Rohrende von wo das Reichgas abgezogen werden kann. Außerdem erhöht das zweite Kontaktgas das Schadstoff-Konzentrationsgefälle an an den Schüttgutoberflächen und fördert dadurch die Desorption dieser Komponenten. Da die Regenerationsrohre in erster Linie von Außen indirekt beheizt werden, ist der Verdünnungsgrad des sich bildenden Reichgases durch das zweite Kontaktgas geringer als bei dem Direktkontakt-Regenerationsverfahren gemäß DE 42 24 778 A1. Das zweite Kontaktgas kann grundsätzlich auch im Gegenstrom zum Schüttgut, also mit Strömungsrichtung nach oben durch die Regenerationsrohre geleitet werden. Wenn jedoch, gemäß einer bevorzugten Ausführungsform der Erfindung, sich zwischen der Aufheizstufe und der Kühlstufe eine so genannte Nachentgasungsstufe sich befindet, in der das Schüttgut einen Nachentgasungsraum durchwandert, dessen Querschnitt im Vergleich zum Summenquerschnitt der Regenerationsrohre und der Kühlrohre größer ist, und dort, vorzugsweise, kein Rohrbündel zum Führen des Schüttgutes vorhanden ist, wird das zweite Kontaktgas vorzugsweise im Gleichstrom mit dem Schüttgut, also mit Strömungsrichtung nach Unten durch die Regenerationsrohre geführt.

Der Wärmehaushalt eines solchen Prozesses sowie der Verbrauch an Kontaktgas sowie der Verdünnungsgrad des sich bildenden Reichgases können noch weiter verbessert werden, wenn das erste Kontaktgas nach seinem Austritt aus den Kühlrohren nachfolgend als zweites Kontaktgas durch die Regenerationsrohre geführt wird. Hierdurch wird ein Bereitstellen von eigenständigem zweitem Kontaktgas vermieden. Dies ist vor allem dann nützlich, wenn es sich bei den Kontaktgasen um ein bezüglich des Schüttgutes inertes Gas handelt, insbesondere ein sauerstofffreies Gas, wie N2 handelt. Ein solches Kontaktgas vermeidet unerwünschte chemische Reaktionen an der Schüttgutoberfläche oder in den Schüttgutporen. Die in der Kühlstufe in das erste Kontaktgas eingetragene Schadstoffmenge, wie z.B. SO₂, die sich danach in dem Inertgas befindet, wenn dieses als zweites Kontaktgas verwendet wird, ist in der Aufheizstufe unschädlich, weil dort ohnehin und auch in erheblicher Menge Schadstoffe aus dem Schüttgut abgetrieben werden, die nachfolgend von dem Schüttgut abgezogen werden. Das so mit Schadstoffen vorkontaminierte zweite Kontaktgas verringert zudem den Verdünnungsgrad des gewonnenen Schadstoff-Reichgases.

Wenn das erste Kontaktgas durch die Kühlstufe im Gegenstrom zum Schüttgut geführt wird, heizt es sich an dem Schüttgut auf annähernd Regenerationstemperatur auf und wird auf diesem Temperaturniveau bereits dem Inneren der Regenerationsrohre zugeführt. Es leistet damit auch einen Beitrag zur Wärmebereitstellung in der Aufheizstufe (Regenerationsstufe), wobei das zweite Kontaktgas in der Aufheizstufe sowohl im Gegenstrom aber auch im Gleichstrom zum Schüttgut durch die Regenerationsrohre geführt werden kann. Der Verbrauch an Kontaktgas kann auf diese Weise also deutlich eingeschränkt werden, was mit Blick auf die Kosten von z.B. einer Stickstoffgasbereitstellung von besonderem Vorteil ist. Auch der Verdünnungsgrad des in der Aufheiz- und Regenerationsstufe anfallenden Reichgases wird auf diese Weise günstig verringert.

Um die Wärmeübertragung beim Aufheizen auf das in den Regenerationsrohren befindliche Schüttgut und/oder beim Abkühlen des in den Abkühlrohren befindlichen Schüttgutes zu vergleichsmäßigen, wird vorgeschlagen, das Aufheizgas und/oder das Abkühlgas entlang jedes einzelnen Regenerationsrohres und/oder Abkühlrohres oder entlang von Gruppen von Regenerationsrohren und/oder Abkühlrohren zwischen einem für die Regenerationsrohre und/oder Abkühlrohre jeweils gemeinsamen Gaseinlassraum und einem bezüglich des Gaseinlassraumes einen geringeren Druck aufweisenden gemeinsamen Gasauslassraum durch das einzelne Regenerationsrohr und/oder Abkühlrohr oder Gruppen von Regenerationsrohren und/oder Abkühlrohren umgebende Gasblenden oder Mantelrohre durchzuleiten. Anders als beim Stand der Technik erfahren auf diese Weise alle Regenerations- und/oder Abkühlrohre die gleiche indirekte Aufheizung bzw. Abkühlung. Insbesondere werden unterschiedliche Gastemperaturen an den Außenflächen der verschiedenen Regenerationsrohre bzw. Abkühlrohre vermieden. Zwischen dem jeweiligen Gaseinlassraum und dem Gasauslassraum des Röhrenregenerators und des Röhrenkühlers werden durch die Erfindung gleichmäßige Differenzdruckverhältnisse für alle Regenerationsrohre bzw. Abkühlrohre erzielt. Dies führt zu gleichmäßigen Regenerationsergebnissen bzw. Abkühlergebnissen für die Schüttgutpartikel in allen der in der Regel zahlreichen Regenerationsrohre bzw. Abkühlrohre. - Demgegenüber waren nach dem Stand der Technik bei Röhrengeneratoren die auf die Röhrenaußenflächen verschiedener Rohre einwirkenden Temperaturen deutlich verschieden. - Es hat sich herausgestellt, dass bei der vorliegenden Erfindung außerordentlich gleichmäßige Temperaturbedingungen für alle Regenerationsrohre bzw. Abkühlrohre erreicht werden. Insbesondere können Überhitzungen an einzelnen Regenerationsrohren, wie sie beim Stand der Technik auftraten, vermieden werden. Das Schüttgut wird somit trotz maximaler Regenerationswirkung bestmöglich geschont und/oder es werden unerwünschte Reaktionen der zu desorbierenden Schadstoffe vermieden. Eine derartige indirekte Aufheizung und/oder Abkühlung der Wärmeaustauschrohre ist auch ohne die (direkte) Kontaktgasanwendung von eigenständig erfinderischer Bedeutung.

Wenn das Schüttgut aus jedem Kühlrohr oder aus je einer Gruppe von Kühlrohren schrittweise über je eine mechanische Austragsvorrichtung aber gemeinsam und gleich stark abgezogen wird, wird dadurch jeweils eine über alle Regenerationsrohre und über alle Kühlrohre gleichmäßige Wärmezufuhr bzw. Wärmeabfuhr für das Schüttgut in jedem Rohr erreicht. - Anders als beim Stand der Technik, der für Röhrendesorber lediglich eine einzige Zellradschleuse oder dergleichen als Austragsvorrichtung am unteren Reaktorende vorsah, ist bei der Erfindung also ein Schüttgutabzug nunmehr den unteren Ende der Kühlrohre und jedem einzelnen Kühlrohr zugeordnet. - Bei der Erfindung werden also Kernflussprobleme und dergleichen vermieden und erreicht, dass alle schüttgutführenden Rohre die gleichen Schüttgutmengen durchsetzen, wenn alle Austragsvorrichtungen entsprechend bedient werden und gestaltet sind. Zusätzlich können Schüttgutleiteinrichtungen dazu beitragen, dass auch innerhalb des in der Regel konusförmigen Schüttgutsammelraumes unterhalb der Austragsvorrichtungen eine vergleichmäßigte Schüttgutverweilzeit erzielt wird. Eine derartige Austragsvorrichtung ist für gattungsgemäße Regenerationsvorrichtungen auch ohne Kontaktgasanwendung und/oder ohne die Wärmeaustauschrohre umgebende Gasblenden oder Mantelrohre von eigenständiger erfinderischer Bedeutung.

Im Sinne der Erfindung ist es möglich, die Regenerationsrohre, ggf. mit einer geringfügigen Unterbrechung, in die Kühlrohre übergehen zu lassen, wenn der die Regenerationsrohre umgebende, von Heizfluid durchströmte Aufheizraum von dem die Kühlrohre umgebenden und von Kühlfluid durchströmten Abkühlraum fluidisch getrennt ist. Eine solche Anordnung ist auch dann möglich, wenn Kühlrohre im Gegenstrom und die Regenerationsrohre im Gleichstrom von Kontaktgas durchströmt werden. Beide Kontaktgase und das desorbierte Gas können dann insgesamt an einer Öffnungsstelle im Übergangsbereich zwischen Aufheizung und Kühlung in einen Gasabzugsraum einströmen. Ebenso ist es im Sinne der Erfindung, wenn zwischen dem Aufheizraum und dem Abkühlraum ein Nachentgasungsraum zwischengefügt ist, der ggf. schüttgutleitende Einbauten aber keine Schüttgutführungsrohre wie in der Aufheizstufe und in der Abkühlstufe aufweist und dessen Querschnitt vorzugsweise größer als die Summe der Querschnittsflächen der Regenerationsrohre und/oder der Kühlrohre ist. Ein derartiger Nachentgasungsraum gewährleistet für das Schüttgut eine ausreichend große Verweilzeit auf etwa der Reaktionstemperatur.

Wenn eine Nachentgasungsstufe zwischen der Regenerationsstufe und der Kühlstufe eingefügt ist, werden die beiden Kontaktgase, die über das obere Ende der Kühlrohre und das untere Ende der Regenerationsrohre in die nachentgasungszone einströmen, innerhalb der Nachentgasungszone vorzugsweise voneinander getrennt. Dies kann durch dachförmige Einbauten in die Nachentgasungszone in einer oder in mehreren übereinander liegenden Ebenen erfolgen. Hierbei können dachförmige Einbauten Verwendung finden, wie sie unter anderem aus der WO .... bekannt sind. Wenn in der Nachentgasungszone keine vollständige fluidische Trennung vorgesehen ist, weil das Schüttgut die Nachentgasungszone insgesamt von oben nach unten durchwandert, wird eine Trennung des ersten Kontaktgases von der Mischung aus zweitem Kontaktgas und Desorptionsgas bzw. allein von dem Desorptionsgas durch eine Gasdrucksteuerung gefördert, indem z.B. der Saugdruck zum Abführen des ersten Kontaktgases und/oder der Saugdruck zum Abführen des Desorptionsgases und des zweiten Kontaktgases so eingestellt wird, dass zwischen der Saugebene für erstes Kontaktsgas und der Absaugbene für Desorptionsgas und ggf. zweites Kontaktgas möglichst gering ist. Die Kontaktgastrennung bei einem gattungsgemäßen Regenerationsverfahren ist von eigenständig erfinderischer Bedeutung.

Um auch bei unterschiedlichem Anfall pro Zeiteinheit an zu regenerierendem Schüttgut einen gleichmäßigen Betrieb der Regenerationsanlage und die gewünschten Regenerationsergebnisse zu erzielen, ist der Regenerationsreaktor vorzugsweise ein oder mehrfach längsgeteilt, d.h. in parallele vertikal verlaufende Sektoren unterteilt, wobei jeder Sektor fluidseitig und schüttgutseitig gesondert angeschlossen ist. Dadurch können die Sektoren unabhängig voneinander betrieben werden. Um einen oder mehrere Sektoren auch während des Betreibens der übrigen Sektoren warten oder reparieren zu können, ohne dass die sich zwischen den Sektoren einstellenden unterschiedlichen Temperaturen zu schädlichen Wärmespannungen im Gesamtreaktor führen, die Wärmespannungsprobleme oder dergleichen hervorrufen, sind die Trennwände zwischen den Sektoren wärmeisolierend und/oder längenausgleichend ausgeführt. Längsgeteilte gattungsgemäße Regenerationsreaktoren sind von eigenständig erfinderischer Bedeutung.

Weitere vorteilhafte Ausgestaltungen der Erfindung sehen vor, dass
- Regenerationsrohre in einer oder jenseits einer die Nachentgasungskammer von der Aufheizkammer fluidisch trennenden Zwischenwand münden;
- die Nachentgasungszone, die auch die Funktion einer Hauptentgasungszone innen haben kann, einen radial außen gelegenen Gassammelraum und einen von dem Gassammelraum durch durchbrochene Wände getrennten, nach radial innen gelegenen Schüttgutverweilraum aufweist, in den die Regenerationsrohre münden und von dem die Kühlrohre ausgehen;
- die Mündungsenden mehrerer Kühlrohre oberhalb eines trichterförmigen Einlassen je einer Schüttgutaustragsvorrichtung münden, wobei, insbesondere, die Kühlrohre in einen Austragstrichter münden und/oder, insbesondere, Unterteilungswände innerhalb des Austragstrichters vorgesehen sind, so dass für jedes Kühlrohr eine Trichtereinlassöffnung und eine Trichterauslassöffnung vorgesehen ist;
- die Haupt- oder Nachentgasungszone schüttgutumlenkende Einbauten zur Förderung einer Fluidtrennung aufweist;
- die Haupt- oder Nachentgasungszone Jalousiewände aufweist, die das Schüttgut von einem seitlich gelegenen Gasabzugsraum trennen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Regenerationsreaktors dargestellt ist.

### FIGURENKURZBESCHREIBUNG

In der Zeichnung zeigen:
- Fig. 1A: eine erste Regenerationsanlage in schematisierter Gesamtansicht in Vertikalschnittansicht;
- Fig. 1B: dieselbe Regenerationsanlage in einer um 90 Grad gedrehten Vertikalschnittansicht;
- Fig. 2: von einer zweiten Regenerationsanlage den Reaktionsreaktor in Vertikalschnittansicht;
- Fig. 3: eine dritte Regenationsanlage im schematisierten Vertikalschnitt;
- Fig. 4A: von einer vierten Regenationsanlage den Reaktionsreaktor im Vertikalschnitt;
- Fig. 4B: von derselben Regenationsanlage den Reaktionsreaktor im Horizontalschnitt entlang der Linie A - A sowie
- Fig. 5: von einer modifizierten Ausführungsform der Regenerationsanlage nach Fig. 1B einen Horizontalschnitt durch den Vorratsbunker der Aufheizstufe (Schnitt entlang der Linie V-V gemäß Fig. 1).

### DETAILLIERTE BESCHREIBUNG VON AUSFÜHRUNGSBEISPIELEN

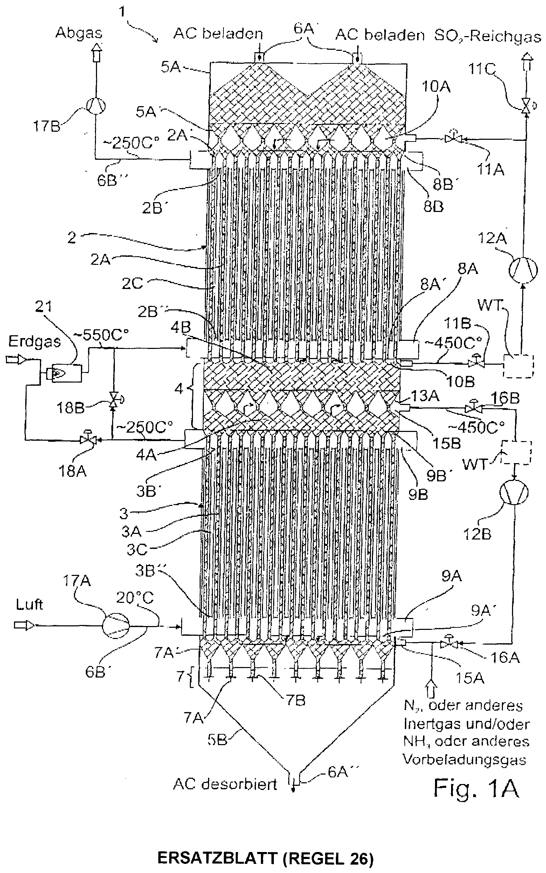

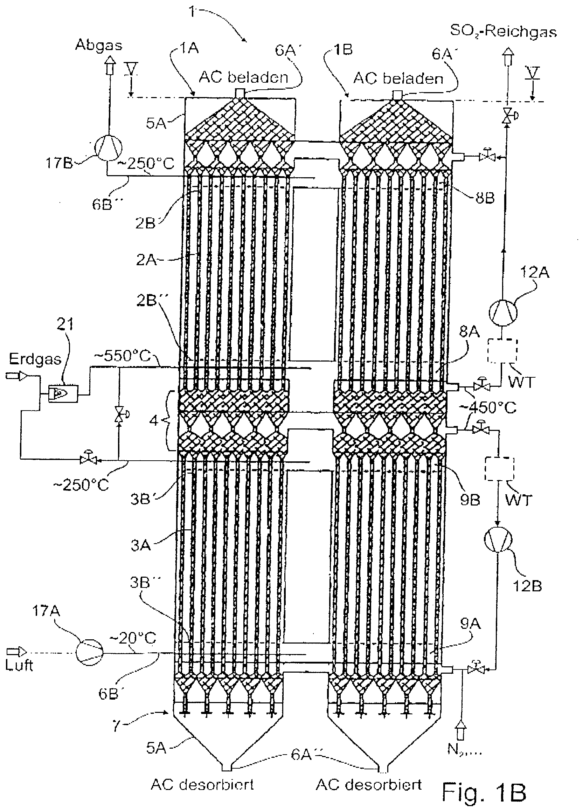

Aus Figuren 1A, 1B ist ein Regenerationsreaktor 1 mit einer Aufheizstufe 2, einer Abkühlstufe 3 und einer dazwischen gelegenen Nachentgasungsstufe 4 ersichtlich, bei der zu regenerierendes Schüttgut über eine oder mehrere nicht dargestellte Einlassschleuse/n, wie eine Zellenradschleuse, von oben in einen Schüttgutaufgabebunker 5A gelangt, während regeneriertes Schüttgut über einen Schüttgutabgabebunker 5B und eine daran sich anschließende, nicht dargestellte, Austragsschleuse wieder ausgeschleust wird. Die Aufheizstufe 2 besteht aus einer Vielzahl etwa gleichdimensionierter Regenerationsrohre 2A, die sich parallel zueinander zwischen dem Schüttgutaufgabebunker 5A und der Nachentgasungsstufe 4 erstrecken. Am oberen Ende der Regenerationsrohre 2A erleichtern Aufgabetrichter 2A' den gleichmäßigen Übertritt von Schüttgut aus dem Schüttgutaufgabebunker 5A in die Regernationsrohre 2A. Diese Aufgabetrichter bilden gleichzeitig einen fluiddichten Zwischenboden 8B' gegenüber dem darunter gelegenen (zweiten) Gasauslassraum 8B. Ein fluiddichter Zwischenboden 8A' trennt die Nachentgasungsstufe 4 von dem darübergelegenen zweiten Gaseinlassraum 8A, während die Regenerationsrohre 2A den Zwischenboden 8A' durchdringen und in einer weiter unten gelegenen Position offen münden. Der zweite Gaseinlassraum 8A erstreckt sich also - ebenso wie der zweite Gasauslassraum 8B - quer zu den Regenerationsrohren 2A und besitzt einen hinreichend großen Querschnitt, um gleiche Druckverhältnisse über den gesamten Querschnitt des Gaseinlassraumes 8A sicherzustellen. An geeigneter Stelle, z.B. über einen Gasverteilkanal 8A" (Fig. 1B), wird der zweite Gaseinlassraum 8A mit z.B. 450°C heißem Wärmeträgerfluid wie einem heißen Verbrennungsgas, beaufschlagt. In entsprechender Weise kann das durch Wärmeübertragung auf die Außenfläche der Regenerationsrohre 2A auf z.B. 250°C abgekühlte Aufheizgas den zweiten Gasauslassraum 8B wieder verlassen. Wenn die seitlichen Abstände der Regenerationsrohre 2A voneinander vergleichsweise klein sind, kann der dadurch erzeugbare Strömungswiderstand bereits ausreichen, dass das im zweiten Gaseinlassraum 8A anstehende Heizgas durch alle Zwischenräume gleichmäßig zwischen allen Regenerationsrohren 2A auf deren Außenseite entlang in den zweiten Gasauslassraum 8B abströmt. Um diesen Effekt zu optimieren, insbesondere auch bei etwas größeren seitlichen Abständen der Regenerationsrohre 2A, kann ein gelochter Zwischenboden 2B', 2B" im jeweils oberen und unteren Endbereich der Regenerationsrohre 2A derart vorgesehen sein, dass die Zwischenböden den unteren Abschluss des zweiten Gasauslassraumes 8B bzw. den oberen Abschluss des zweiten Gaseinlassraumes 8A bilden. Durch jede dieser Durchbrechungen ist eines der Regernationsrohre 2A mit definiertem seitlichen Abstand hindurch gesteckt, so dass ringblendenartige Gasdurchtrittsspalte um die Regernationsrohre herum entstehen. Die gelochten Zwischenböden 2B' und 2B" bilden mithin Gasblenden zur sicheren Aufrechterhaltung eines bestimmten Fluiddruckgefälles für Heizfluid zwischen dem zweiten Gaseinlassraum 8A und dem zweiten Gasauslassraum 8B.

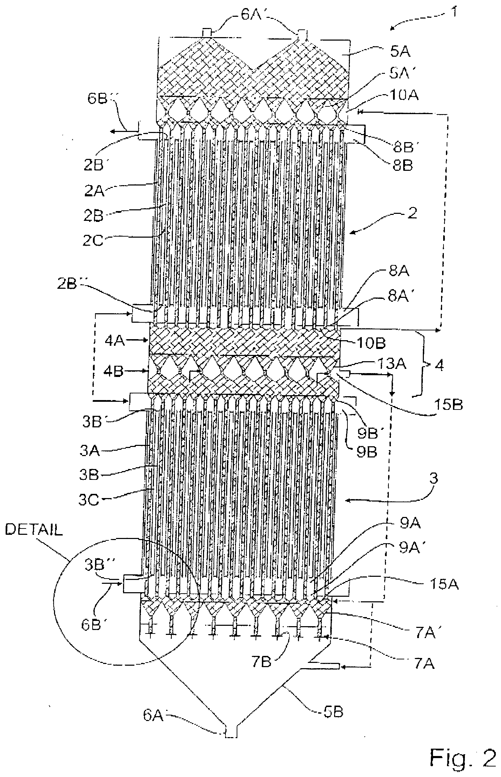

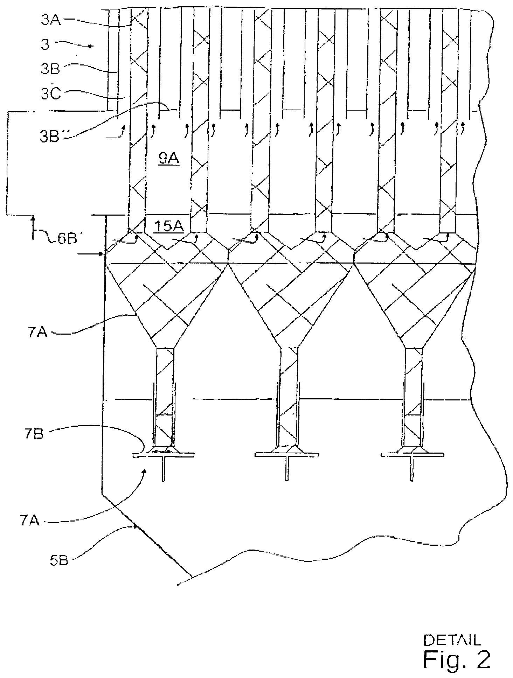

In bestimmten Fällen kann es von Vorteil sein, wenn jedes der Regenerationsrohre 2A von einem Mantelrohr 2B (Fig. 2) mit definiertem Abstand umgeben ist, wobei die Mantelrohre in den Durchbrechungen der gelochten Zwischenböden 2B' und 2B" dicht münden. Hierdurch werden besonders gleichmäßige Strömungsverhältnisse des Heizgases entlang aller Regenerationsrohre erzielt. Es ist auch möglich, Mantelrohre der vorbezeichneten Art jeweils einer Mehrzahl von Regenerationsrohren zuzuordnen. Im Extremfall dient die Reaktorumhüllung im Bereich der Aufheizstufe als ein solcher Mantel, nämlich in Fällen, in denen die Abstandsräume zwischen den Regenerationsrohren 2A in der oben beschrieben Weise ausreichend klein sind.

Die Kühlstufe 3 ist vorzugsweise in gleicher Weise wie die Heizstufe 2 aufgebaut, einschließlich der Ausbildung im Bereich der Gasblenden (Fig. 1A/B) oder Mantelrohre (Fig. 2), des ersten Gaseinlassraumes 9A und des ersten Gassammelraumes 9B sowie der etwaigen Mantelrohre 3B (Fig. 2).

Die Kühlrohre 3A münden unterhalb des dem ersten Gaseinlassraum 9A zugeordneten und ansonsten fluiddichten Zwischenboden 9A' mit gewissem Abstand offen oberhalb einer Vielfach-Austragsvorrichtung (Austragsvorrichtung 7), wobei jeweils ein Austragmechanismus 7A einer oder mehreren Kühlrohrmündung/en zugeordnet ist. In dem dargestellten Falle sind jeweils vier Kühlrohren 3A einem Austragsmechanismus 7A zugeordnet, weshalb dieser mit entsprechenden Schüttguttrichtern 7A' versehen ist. Alle Austragsmechanismen 7A können gleichzeitig betätigt werden, wobei Aufbau der Austragsmechanismen 7A und deren Betätigung bekannten Austragsvorrichtungen entspricht. Ein jedem Austragsmechanismus 7A zugehörender oder oberhalb einer Schüttgutstauplatte 7B quer beweglich angeordneter (an sich bekannter und der Übersichtlichkeit halber nicht dargestellter) Schieber gestattet es, bei jedem seiner quer zur Rohrmündung erfolgenden Bewegungshübe eine vergleichsweise kleine Schüttgutmenge fortzuschaffen, die dann aus dem Schüttgutaufgabebunker 5A durch Nachrutschen wieder aufgefüllt wird. Dieser Vorgang ist bei allen Kühlrohren 3A der gleiche, so dass die Verweilzeit der Schüttgüter in den einzelnen Regenerationsrohren 2A und den einzelnen Kühlrohren 3A jeweils identisch ist. Da am oberen Ende der Regenerationsrohre 2A das Schüttgut oben automatisch nachrutscht, werden auch die Regenerationsrohre 2A alle gleichmäßig von Schüttgut durchwandert. Zusätzliche Schüttgutaustragsvorrichtungen in der Aufheizstufe sind hierzu entbehrlich.

### Ausführungsbeispiel

In einen Regenerationsreaktor nach Figuren 1A/1B wird über Zuführleitungen 6A' zu regenerierendes Adsorptionsmittel (AC beladen) aufgegeben, wobei die Schüttgutaufgabebunker 5A als Puffervolumen dienen und rasterförmig angeordnete Schüttgutaufgabetrichter 5A' mit unteren Schüttgutdurchlässen versehen sind. Diese enden in einem Gasverteilraum 10A, in dem von oben die Schüttgutdurchlässe münden und in dessen Boden eine Vielzahl rasterförmig verteilter Regenerationsrohre 2A sich nach oben trichterförmig erweiternd münden, wobei die Anordnung so getroffen ist, dass unterhalb eines Aufgabetrichters 5A' vier im Quadrat angeordnete Aufgabetrichter 2A' vier Regenerationsrohre 2A mit beladenem AC versorgen. Da der Schüttgutaufgabebunker 5A befüllseitig durch im Wesentlichen gasdichte Verschlussorgane verschlossen ist, gelangt ein dem Gasverteilraum 10A zugeführter Gasstrom von oben in die Regenerationsrohre 2A an deren unteren offenen Ende die oben zugeführten Gase die Regenerationsrohre wieder verlassen und die Gase aus dem Gassammelraum 10B nahe der Mündungsenden der Regenerationsrohre 2A sich sammeln und über ein Ventil 11B aus dem Regenerationsreaktor abgeführt werden können. Das austretende Gas wird über ein Gebläse 12A und ein Ventil 11A im Kreislauf, d.h. erneut durch die Regenerationsrohre 2A geführt. Aufgrund der indirekten Aufheizung des beladenen AC mittels indirekter Wärmeübertragung über die Mantelflächen der Regenerationsrohre 2A, werden an den beladenen AC gebundene gasförmige Schadstoffe, wie SO2, während der Aufheizphase zunehmend desorbiert (Desorptionsgas). Dadurch, dass dieses Desorptionsgas im Kreislauf geführt wird, reichert es sich bis zu einer Sättigungsgrenze mit desorbierten Gaskomponenten an. Der durch die Desorptionsrate anfallende Gasmengenüberschuss wird über ein Ventil 11C aus dem Reichgaskreislauf abgeführt um z.B. weiterverarbeitet zu werden.

Die Nachentgasungsstufe 4 ist durch einen von Durchlasstrichtern 13A gebildeten Zwischenboden horizontal in zwei Schüttgutebenen 4A und 4B unterteilt. Der dadurch in der oberen Schüttgutebene 4A entstehende Gasströmungswiderstand führt dazu, dass die Desorptionsgase aus den Desorptionsrohren 2A und aus der oberen Schüttgutebene 4A sich bevorzugt in dem Gassammelraum 10B sich sammeln und nicht durch die Trichteröffnungen der Durchlasstrichter 13A entweichen. Das als Kontaktgas den Wärmeübergang in der Aufheizstufe sowie den Desorptionsvorgang fördernde Kreislaufgas bewegt sich also im Gleichstrom mit dem langsam nach unten durch die Regenerationsrohre 2A wandernden AC.

In der Abkühlstufe 3 wird ebenfalls ein Kontaktgas, nämlich Stickstoff verwendet, dass allerdings im Gegenstrom zum AC durch das Innere der Abkühlrohre 3A strömt und unterhalb der Durchlasstrichter 13A von dem Desorptionsgas ferngehalten wird. Durch geeignete Einstellungen der Gasdruckverhältnisse, kann erreicht werden, dass das Stickstoff-Kreislaufgas in geringen Mengen durch die Durchlasstrichter 13A in das Desorptionsgas einströmt. Hierdurch werden in der unteren Schüttgutebene 4B anfallende Restmengen an Desorptionsgas ebenfalls dem Reichgasstrom zugeführt, ohne dass eine allzu große Konzentrationsverdünnung eintritt.

Das über die Austragsorgane 7A schrittweise und gleichmäßig aus allen Kühlrohren 3A abgezogene und auf etwa Raumtemperatur abgekühlte AC verlässt den Regenerationsreaktor 1 über den Schüttgutabgabebunker 5B und eine Schüttgutabführleitung 6A".

Die im Gegenstrom zur AC Wanderung erfolgende indirekte Kühlung mittels Luft, erfolgt dank der gelochten Zwischenböden 3B', 3B" und die die Kühlrohre 3A umgebenden Ringblenden über den gesamten Reaktorquerschnitt verteilt sehr gleichmäßig. Dabei erwärmt sich die Kühlluft auf etwa 250°C. Sie ist von dem stickstoffhaltigen Kontaktgas in der Kühlstufe vollständig getrennt und verlässt den Gassammelraum 9B, um nachfolgend zusammen mit einem Brenngas, wie Erdgas, auf etwa 550°C aufgeheizt zu werden und als Aufheizgas in der Aufheizkammer 2C zu dienen. Aus dieser wird es am oberen Endbereich der Aufheizrohre 2A über den Gasauslassraum 8B als Abgas abgeführt. Auf diese Weise kann eine Temperatur des AC von etwa 450°C am unteren Ende der Aufheizstufe 2 erreicht werden.

Wie die Seitenansicht in Figur 1B zeigt, kann der Regenerationsreaktor 1 in Teilreaktoren 1A und 1B längsgeteilt sein, um z.B. günstige Strömungsverhältnisse beim Anströmen und Abströmen der Kühlgase und der Aufheizgase zu erreichen.

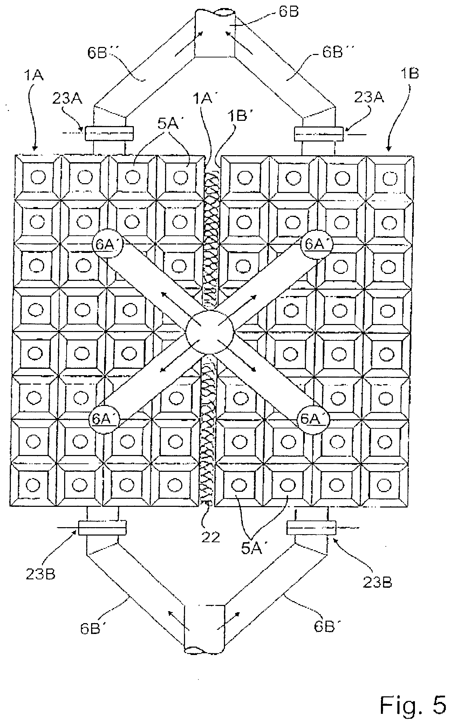

Wenn, wie in Figur 5 beispielhaft dargestellt, für beide Teilreaktoren getrennte Gasführungen vorgesehen sind, können beide Teilreaktoren auch unabhängig voneinander betrieben werden, was sich vor allem bei schwankendem Anfall an zu regenerierendem Schüttgut als vorteilhaft erweist, wenn der Regenerationsprozess möglichst gleichmäßig, d.h. mit vorhersehbaren Regenerationsergebnissen durchgeführt werden soll.

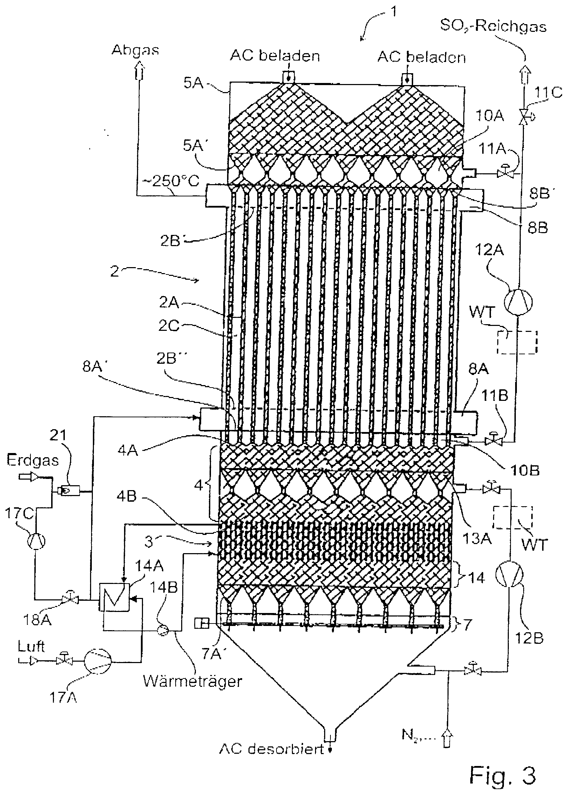

Das Ausführungsbeispiel nach Figur 3 unterscheidet sich von demjenigen nach Figuren 1A/1B dadurch, dass in der Kühlstufe anstelle von Kühlrohren Durchlasskanäle durch indirekt gekühlte Kühlregister 14 vorgesehen sind, durch die das Schüttgut geführt wird. Die Kühlregister können z.B. von einem flüssigen Wärmeträger im Kreislauf durchströmt werden.

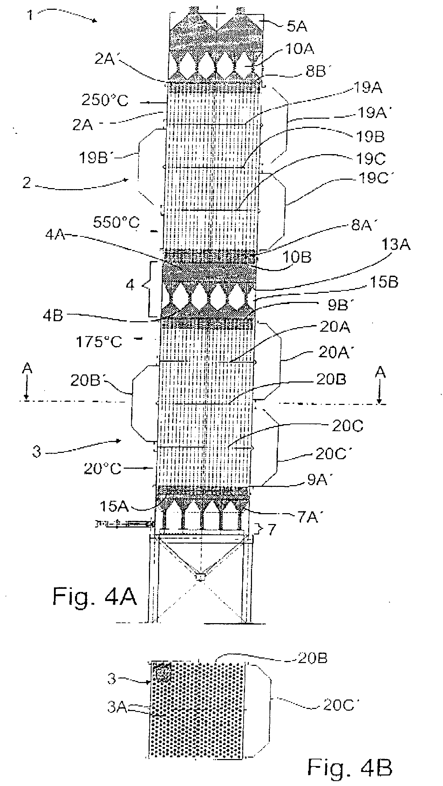

Das Ausführungsbeispiel nach Figur 4 unterscheidet sich von dem Ausführungsbeispiel nach Figur 1A/1B dadurch, dass das Aufheizgas - und in gleicher Weise das Kühlgas - jeweils quer zu den Aufheizrohren 2A bzw. den Abkühlrohren 3A durch die Aufheizkammer 2C bzw. die Abkühlkammer 3C geführt und außerhalb des Bereiches der Rohrregister um 180° umgelenkt (Umlenkungen 19A', 19B', 19C' und 20A', 20B', 20C') und wieder in die Aufheizkammer bzw. Abkühlkammer zurückgeführt wird, und zwar in einer jeweils höher gelegenen Ebene. Zu diesem Zweck ist die Aufheizkammer bzw. die Kühlkammer horizontal mehrfach und im Wesentlichen gasdicht durch horizontale Böden 19A, B, C bzw. 20A, B, C unterteilt. Kontaktgasanwendung, Kontaktgastrennung in der Nachentgasungszone, Schüttgutabzug über eine Vielzahl von Schüttgutabzugstrichtern sowie getrennte Kreislaufführungen der Kontaktgases in der Aufheizstufe und in der Abkühlstufe werden bevorzugt wie in dem ersten Ausführungsbeispielen durchgeführt.

### BEZUGSZEICHENLISTE

- 1: Regenerationsreaktor
- 1A: Teilreaktor
- 1B: Teilreaktor
- 1A': Zwischenwand
- 1B': Zwischenwand
- 2: Aufheizstufe
- 2A: Regenerationsrohre
- 2A': Aufgabetrichter Zwischenboden
- 2B: Mantelrohre
- 2B': gelochter Zwischenboden
- 2B": gelochter Zwischenboden
- 2C: Aufheizkammer
- 3: Abkühlstufe
- 3A: Kühlrohre
- 3B: Mantelrohre
- 3B': gelochter Zwischenboden
- 3B": gelochter Zwischenboden
- 3C: Abkühlkammer
- 4: Nachentgasungsstufe
- 4A: obere Schüttgutebene (Haupt-Nachentgasungszone)
- 4B: untere Schüttgutebene (Rest-Nachentgasungszone)
- 5A: Schüttgutaufgabebunker
- 5A': Aufgabetrichter (Schüttgutdurchlässe)
- 5B: Schüttgutabgabebunker
- 6A: Sammelleitung Schüttgut
- 6A': Zuführleitung Schüttgut
- 6A": Abführleitung Schüttgut
- 6B: Sammelleitung Fluid
- 6B': Zuführleitung Fluid
- 6B": Abführleitung Fluid
- 7: Austragsvorrichtung
- 7A: Austragsorgane
- 7A': Schüttguttrichtern
- 7B: Schüttgutstauplatte
- 8A: Gaseinlassraum
- 8A': Zwischenboden
- 8A": Gasverteilkanal
- 8B: Gasauslassraum
- 8B': Zwischenboden
- 9A: Gaseinlassraum
- 9A': Zwischenboden
- 9B: Gassammelraum
- 9B': Zwischenboden
- 10A: Gasverteilraum
- 10B: Gassammelraum
- 11A: Ventil
- 11B: Regelventil
- 11C: Ventil
- 12A: Kreislaufgebläse
- 12B: Kreislaufgebläse
- 13A: Durchlasstrichter
- 14: Kühlregister
- 14A: Wärmeaustauscher
- 14B: Pumpe
- 15A: Gasverteilraum
- 15B: Gassammelraum
- 16A: Ventil
- 16B: Regelventil
- 17A: Gebläse
- 17B: Gebläse
- 17C: Gebläse
- 18A: Regelventil
- 18B: Regelventil
- 19A': Umlenkung
- 19B': Umlenkung
- 19C': Umlenkung
- 20A': Umlenkung
- 20B': Umlenkung
- 20C': Umlenkung
- 21: Feuerung
- 22: thermomechanische Entkopplungsschicht
- 23A: Absperrklappe
- 23B: Absperrklappe

- WT: Wärmeaustauscher

## Patentansprüche

1. Verfahren zum thermischen Regenerieren von ab-/adsorptiv beladenen Schüttgütern, bei dem das Schüttgut einen mehrstufigen geschlossenen Regenerationsreaktor von oben nach unten derart durchwandert, dass das Schüttgut
- in den Regenerationsreaktor eingeschleust wird,
- in einer Aufheizstufe durch indirekt beheizte, parallel angeordnete Regenerationsrohre unter Aufheizen geführt wird,
- in einer Abkühlstufe durch indirekt gekühlte, parallel angeordnete Kühlrohre unter Abkühlen geführt wird und
- nachfolgend aus dem Regenerationsreaktor ausgeschleust wird, **dadurch gekennzeichnet, dass** das Aufheizgas bzw. das Abkühlgas entlang jedes einzelnen Regenerations- und/oder Abkühlrohres oder entlang einzelner Gruppen von Regenerations- und Abkühlrohren zwischen einem für die Regenerationsrohre und/oder die Abkühlrohre jeweils gemeinsamen Gaseinlassraum und einem bezüglich des Gaseinlassraumes einen geringeren Druck aufweisenden gemeinsamen Gassammelraum durch die Regenerations- und/oder Abkühlrohre oder Gruppen von Regenerations- und/oder Abkühlrohren umgebende Gasblenden oder Mantelrohre geleitet wird.

2. Verfahren nach Anspruch 1, **dadurch gekennzeichnet, dass** das Schüttgut zwischen der Aufheizstufe und der Abkühlstufe durch eine Haupt- oder Nachentgasungsstufe geführt wird.

3. Verfahren nach Anspruch 1, **dadurch gekennzeichnet, dass**
zusätzlich zur indirekten Aufheizung und/oder Kühlung des Schüttgutes mindest ein Kontaktgas verwendet wird, das die mit Schüttgut befüllten Regenerationsrohre und/oder die mit Schüttgut befüllten Kühlrohre im Rohrinneren durchströmt.

4. Verfahren nach Anspruch 3, **dadurch gekennzeichnet, dass** ein Kontaktgas im Gegenstrom zur Schüttgutwanderrichtung durch die Kühlrohre geleitet wird.

5. Verfahren nach Anspruch 3, **dadurch gekennzeichnet, dass** ein zweites Kontaktgas im Gleichstrom zur Schüttgutwanderrichtung durch die Regenerationsrohre geleitet wird.

6. Verfahren nach einem der Ansprüche 1 bis 5, **dadurch gekennzeichnet, dass** das Schüttgut aus jedem Kühlrohr einzeln, oder aus Gruppen von Kühlrohren, schrittweise abgezogen wird.

7. Verfahren nach einem der Ansprüche 1 bis 6, **dadurch gekennzeichnet, dass** in der Kühlstufe anstelle von Kühlrohren Durchlasskanäle durch indirekt gekühlte Kühlregister vorgesehen sind, durch die das Schüttgut geführt wird.

8. Verfahren nach einem der Ansprüche 1 bis 7, bei dem zwischen der Aufheizstufe (Regenerationsstufe) und der Kühlstufe eine Nachentgasungsstufe eingefügt ist, in welche erste und zweite Kontaktgase aus der Kühl- und/oder aus der Aufheizstufe einströmen, **dadurch gekennzeichnet, dass** die ersten und zweiten Kontaktgase innerhalb der Nachentgasungsstufe in einer oder mehreren Ebenen mindestens zum Teil voneinander getrennt werden.

9. Verfahren nach Anspruch 8, **dadurch gekennzeichnet, dass** die Trennung durch eine Gasdrucksteuerung erfolgt.

10. Verfahren nach einem der Ansprüche 1 bis 9, **dadurch gekennzeichnet, dass** ein in Sektoren ein- oder mehrfach längs geteilter Regenerationsreaktor verwendet wird und jeder Sektor fluidseitig und schüttgutseitig gesondert an Sammelleitungen angeschlossen ist.

11. Vorrichtung zum thermischen Regenerieren von ab-/adsorptiv beladenen Schüttgütern mit einem mehrstufigen, geschlossenen, von Schüttgut von oben nach unten durchwanderten Regenerationsreaktor (1), umfassend
- ein oberes Einschleusorgan,
- eine Aufheizstufe (2),
- eine Abkühlstufe (3),
- ein Ausschleusorgan,
vertikal oder weitgehend vertikal in einer von Heizfluid durchströmbaren Aufheizkammer (2C) in parallel angeordnete, von dem Schüttgut in Richtung der Abkühlstufe durchwanderbare, von außen beheizte Aufheizrohre (2A) und vertikal oder weitgehend vertikal in einer von Kühlfluid durchströmbaren Abkühlkammer (3C) in parallel angeordnete, von dem Schüttgut zum Ausschleusorgan hin durchwanderbare von außen gekühlte Kühlrohre (3A),
**dadurch gekennzeichnet, dass**
die Aufheiz- und/oder Abkühlkammer die einzelnen Aufheiz- und/oder Abkühlrohre (2A; 3A) oder Gruppen von Aufheiz- und/oder Abkühlrohren mit Abstand umgebende Gasblenden (2B', 2B"; 3B', 3B") oder Mantelrohre (2B; 3B) aufweist, die zwischen einem gemeinsamen Gaseinlassraum (8A; 9A) und einem gemeinsamen und im Übrigen von dem Gaseinlassraum fluidisch getrennten Gasauslassraum (8B; 9B) angeordnet sind.

12. Vorrichtung nach Anspruch 11, **gekennzeichnet durch** eine Haupt- oder Nachentgasungsstufe (4).

13. Vorrichtung nach Anspruch 11 oder 12, **dadurch gekennzeichnet, dass** die Kühlrohre (3A) an ihren Mündungsenden und bezüglich des Schüttgutes stromauf des Ausschleusorgans einzeln oder für Gruppen von Kühlrohren zusammengefasste Austragsorgane (7A) aufweisen.

14. Vorrichtung nach einem der Ansprüche 11 bis 13, **gekennzeichnet durch** einen zwischen dem Einschleusorgan und den Regenerationsrohren (2A) angeordneten, von der Aufheizkammer (2C) fluidisch getrennten Schüttgutaufgabebunker (5A) mit trichterförmigen, zwischen dem Schüttgutaufgabebunker (5A) und dem Inneren der Regenerationsrohre (2A) einen Gasverteilraum (10A) freihaltenden Schüttgutdurchlässen (5A').

15. Vorrichtung nach einem der Ansprüche 11 bis 14, **gekennzeichnet durch** einen die Nachentgasungsstufe (4) von der Abkühlkammer (3C) fluidisch trennenden Zwischenboden (9B') mit trichterförmigen Übergangsstücken zwischen der Nachentgasungsstufe (4) und dem Inneren der Kühlrohre (3A) und/oder einen die Aufheizstufe (2) von der Aufheizkammer (2C) fluidisch trennenden Zwischenboden (8B') mit trichterförmigen Übergangsstücken zwischen dem Schüttgutaufgabebunker (5A) und dem Inneren der Aufheizrohre (2A).

16. Vorrichtung nach einem der Ansprüche 11 bis 15, **dadurch gekennzeichnet, dass** der Regenerationsreaktor (1) über eine im Wesentlichen vertikale Zwischenwand (1A', 1B') in zwei Teilreaktoren (1A, 1B) mit eigenständigen Zu- und Abführleitungen für Schüttgut und für Fluid (6A', 6A"; 6B', 6B") zum Anschluss an Sammelleitungen (6A, 6B) aufgeteilt ist.

17. Vorrichtung nach Anspruch 16, **dadurch gekennzeichnet, dass** die Teilreaktoren thermomechanisch von einander entkoppelt sind.

## Claims

1. Method for thermal regeneration of bulk materials that are loaded by absorption and/or adsorption, in which the bulk material passes from top to bottom through a closed multistage regeneration reactor in such manner that the bulk material
- is fed into the regeneration reactor,
- is passed through indirectly heated regeneration pipes arranged in parallel with heating in a heating stage,
- is passed through indirectly cooled cooling pipes arranged in parallel with cooling in a cooling stage, and
- is then discharged from the regeneration reactor, **characterized in that** the heating gas or cooling gas is guided along each individual regeneration and/or cooling pipe or along individual groups of regeneration and cooling pipes between a gas inlet chamber shared by each of the regeneration pipes and/or cooling pipes and a shared gas collection chamber in which a lower pressure prevails than in the gas inlet chamber through gas apertures or jacket pipes which surround the regeneration and/or cooling pipes or groups of regeneration and/or cooling pipes.

2. Method according to Claim 1, **characterized in that** the bulk material is guided between the heating stage and the cooling stage through a primary or subsequent degassing stage.

3. Method according to Claim 1, **characterized in that** in addition to the indirect heating and/or cooling of the bulk material at least one contact gas is used which flows through the regeneration pipes filled with bulk material and/or the cooling pipes filled with bulk material in the interior of the pipes.

4. Method according to Claim 3, **characterized in that** a contact gas is transported through the cooling pipes in a contraflow direction to the direction of movement of the bulk material.

5. Method according to Claim 3, **characterized in that** a second contact gas is transported through the regeneration pipes in the same direction as the direction of movement of the bulk material.

6. Method according to any one of Claims 1 to 5, **characterized in that** the bulk material is removed from each cooling pipe or each group of cooling pipes incrementally.

7. Method according to any one of Claims 1 to 6, **characterized in that** in the cooling stage pass-through channels through indirectly cooled cooling registers are provided, through which the bulk material is directed, instead of cooling pipes.

8. Method according to any one of Claims 1 to 7, in which a subsequent degassing stage is interposed between the heating stage (regeneration stage) and the cooling stage, into which first and second contact gases flow from the cooling and/or heating stage, **characterized in that** the first and second contact gases are at least partly separated from each other inside the subsequent degassing stage in one or more levels.

9. Method according to Claim 8, **characterized in that** the separation is carried out by a gas pressure control system.

10. Method according to any one of Claims 1 to 9, **characterized in that** a regeneration reactor that is divided lengthwise into two or multiple sectors is used and each sector is connected separately to manifolds on the fluid side and the bulk material side.

11. Device for thermal regeneration of bulk materials that are loaded by absorption and/or adsorption having a closed, multistage regeneration reactor (1) through which bulk material flows from top to bottom, comprising
- an upper infeed element,
- a heating stage (2),
- a cooling stage (3),
- an outfeed element,
externally heated heating pipes (2A) which are arranged in parallel and vertically or substantially vertically in a heating chamber (2C) through which a heating fluid can flow and through which the bulk material can be transported in the direction of the cooling chamber, and
externally cooled cooling pipes (3A) which are arranged in parallel and vertically or substantially vertically in a cooling chamber (3C) through which a cooling fluid can flow and through which the bulk material can be transported in the direction of the outfeed element
**characterized in that**
the heating and/or cooling chamber includes the gas apertures (2B', 2B"; 3B', 3B") or jacket pipes (2B; 3B) that surround the individual heating and/or cooling pipes (2A; 3A) or groups of heating and/or cooling pipes at a distance therefrom, which are arranged between a shared gas inlet chamber (8A; 9A) and a gas outlet chamber (8B; 9B) which is shared and otherwise fluidically separated from the gas inlet chamber.

12. Device according to Claim 11, **characterized by** a primary or subsequent degassing stage (4).

13. Device according to Claim 11 or 12, **characterized in that** the cooling pipes (3A) have discharge mechanisms (7A) at the mouth ends thereof which are combined individually or for groups of cooling pipes upstream of the discharge element with respect to the bulk material.

14. Device according to any one of Claims 11 to 13, **characterized by** a bulk material dispensing hopper (5A) which is arranged between the infeed element and the regeneration pipes (2A) and separated fluidically from the heating chamber (2C) and has funnel-shaped bulk material passthroughs (5A') which keep a gas distribution chamber (10A) unobstructed between the bulk material dispensing hopper (5A) the interior of the regeneration pipes (2A).

15. Device according to any one of Claims 11 to 14, **characterized by** an intermediate bottom (9B') which fluidically separates the subsequent degassing stage (4) from the cooling chamber (3C) and which has funnel-like transition members between the subsequent degassing stage (4) and the interior of the cooling pipes (3A) and/or an intermediate bottom (8B') which fluidically separates the heating stage (2) from the heating chamber (2C) and has funnel-like transition members between the bulk material dispensing hopper (5A) and the interior of the heating pipes (2A).

16. Device according to any one of Claims 11 to 15, **characterized in that** the regeneration reactor (1) is divided into two reactor parts (1A, 1B) by means of a substantially vertical partition (1A', 1B'), each part having independent feed and discharge lines for bulk material and for fluid (6A', 6A"; 6B', 6B"), for connection to manifolds (6A, 6B).

17. Device according to Claim 16, **characterized in that** the reactor parts are thermomechanically decoupled from one another.

## Revendications

1. Procédé de régénération thermique de matières en vrac chargées par adsorption et/ou absorption, dans lequel les matières en vrac traversent de haut en bas un réacteur de régénération multi-étages fermé de telle façon que les matières en vrac
- sont entrées par éclusage dans le réacteur de régénération,
- sont dirigées sous chauffage à travers des tubes de régénération disposés parallèlement, chauffés indirectement, dans un étage de refroidissement,
- sont dirigées sous refroidissement à travers des tubes de refroidissement disposés parallèlement, refroidis indirectement, dans un étage de refroidissement et
- sont ensuite sorties par éclusage du réacteur de régénération, **caractérisé en ce que** le gaz de chauffage, respectivement le gaz de refroidissement, est dirigé le long de chaque tube de régénération et/ou de refroidissement individuel ou le long de différents groupes de tubes de régénération et/ou de refroidissement entre un espace d'admission de gaz commun respectivement aux tubes de régénération et/ou aux tubes de refroidissement et un espace de collecte de gaz commun présentant une pression plus faible par rapport à l'espace d'admission de gaz par des obturateurs de gaz ou des gaines entourant les tubes de régénération et/ou de refroidissement ou les groupes de tubes de régénération et/ou de refroidissement.

2. Procédé selon la revendication 1, **caractérisé en ce que** les matières en vrac sont dirigées entre l'étage de chauffage et l'étage de refroidissement par un étage de dégazage principal ou ultérieur.

3. Procédé selon la revendication 1, **caractérisé en ce qu'**en outre pour le chauffage et/ou le refroidissement indirect des matières en vrac, au moins un gaz de contact est employé qui traverse les tubes de régénération remplis de matières en vrac et/ou les tubes de refroidissement remplis de matières en vrac à l'intérieur des tubes.

4. Procédé selon la revendication 3, **caractérisé en ce qu'**un gaz de contact est dirigé à travers les tubes de refroidissement à contre-courant du sens de déplacement des matières en vrac.

5. Procédé selon la revendication 3, **caractérisé en ce qu'**un second gaz de contact est dirigé à travers les tubes de régénération à même courant que le sens de déplacement des matières en vrac.

6. Procédé selon l'une des revendications 1 à 5, **caractérisé en ce que** les matières en vrac sont extraites progressivement de chaque tube de refroidissement individuel ou de groupes de tubes de refroidissement.

7. Procédé selon l'une des revendications 1 à 6, **caractérisé en ce que** des canaux de passages par des registres de refroidissement refroidis indirectement sont prévus dans l'étage de refroidissement à la place de tubes de refroidissement, à travers lesquels les matières en vrac sont dirigées.

8. Procédé selon l'une des revendications 1 à 7, dans lequel un étage de dégazage ultérieur est inséré entre l'étage de chauffage (étage de régénération) et l'étage de refroidissement, dans lequel entrent des premiers et seconds gaz de contact venant de l'étage de refroidissement et/ou de l'étage de chauffage, **caractérisé en ce que** les premiers et seconds gaz de contact sont séparés au moins partiellement l'un de l'autre en un ou plusieurs niveau(x) à l'intérieur de l'étage de dégazage ultérieur.

9. Procédé selon la revendication 8, **caractérisé en ce que** la séparation a lieu par une commande de pression du gaz.

10. Procédé selon l'une des revendications 1 à 9, **caractérisé en ce qu'**un réacteur de régénération divisé longitudinalement une ou plusieurs fois en secteurs est employé et chaque secteur est raccordé séparément à des lignes collectrices côté fluide et côté matières en vrac.

11. Dispositif de régénération thermique de matières en vrac chargées par adsorption et/ou absorption, comprenant un réacteur de régénération (1) multi-étages fermé traversé de haut en bas par des matières en vrac, comprenant
- un organe supérieur d'entrée par éclusage,
- un étage de chauffage (2),
- un étage de refroidissement (3),
- une organe de sortie par éclusage,
des tubes de chauffage (2A) chauffés par l'extérieur, disposés en parallèle verticalement ou essentiellement verticalement dans une chambre de chauffage (2C) pouvant être traversée par du fluide chaud, pouvant être traversés par les matières en vrac en direction de l'étage de refroidissement et des tubes de refroidissement (3A) refroidis par l'extérieur, disposés en parallèle verticalement ou essentiellement verticalement dans une chambre de refroidissement (3C) pouvant être traversée par du fluide de refroidissement, pouvant être traversés par les matières en vrac en direction de l'organe de sortie par éclusage,
**caractérisé en ce que**
la chambre de chauffage et/ou de refroidissement présente les différents tubes de chauffage et/ou de refroidissement (2A ; 3A) ou des groupes de tubes de chauffage et/ou de refroidissement avec des obturateurs de gaz (2B', 2B" ; 3B', 3B") ou des gaines (2B ; 3B) entourant à distance qui sont disposés entre un espace d'admission de gaz (8A ; 9A) commun et un espace de sortie de gaz (8B ; 9B) commun et en outre séparé fluidiquement de l'espace d'admission de gaz.

12. Dispositif selon la revendication 11, **caractérisé par** un étage de dégazage principal ou ultérieur (4).

13. Dispositif selon la revendication 11 ou 12, **caractérisé en ce que** les tubes de refroidissement (3A) présentent sur leurs extrémités d'embouchure et en amont de l'organe de sortie par éclusage par rapport aux matières en vrac, des organes de déversement (7A) individuels ou réunis pour des groupes de tubes de refroidissement.

14. Dispositif selon l'une des revendications 11 à 13, **caractérisé par** un bloc d'alimentation des matières en vrac (5A) disposé entre l'organe d'entrée par éclusage et les tubes de régénération (2A), séparé fluidiquement de la chambre de chauffage (2C), avec des passages de matières en vrac (5A') en forme de trémie, autoportant un espace de distribution de gaz (10A) entre le bloc d'alimentation des matières en vrac (5A) et l'intérieur des tubes de régénération (2A).

15. Dispositif selon l'une des revendications 11 à 14, **caractérisé par** un fond intermédiaire (9B') séparant fluidiquement l'étage de dégazage ultérieur (4) de la chambre de refroidissement (3C) avec des pièces de liaison en forme de trémie entre l'étage de dégazage ultérieur (4) et l'intérieur des tubes de refroidissement (3A) et/ou un fond intermédiaire (8B') séparant fluidiquement l'étage de chauffage (2) de la chambre de chauffage (2C) avec des pièces de liaison en forme de trémie entre le bloc d'alimentation des matières en vrac (5A) et l'intérieur des tubes de chauffage (2A).

16. Dispositif selon l'une des revendications 11 à 15, **caractérisé en ce que** le réacteur de régénération (1) est divisé par une paroi intermédiaire (1A' ,1B') essentiellement verticale en deux réacteurs partiels (1A, 1B) avec des lignes d'admission et d'évacuation pour des matières en vrac et pour du fluide (6A', 6A" ; 6B', 6B") pour le raccordement à des lignes collectrices (6A, 6B).

17. Dispositif selon la revendication 16, **caractérisé en ce que** les réacteurs partiels sont découplés l'un de l'autre de manière thermomécanique.
